# FASCICULE DE BREVET EUROPEEN

(11) **EP 3 183 169 B1**
(45) Date de publication et mention de la délivrance du brevet: **20.02.2019**
(21) Numéro de dépôt: 15757156.3
(22) Date de dépôt: 11.08.2015
(51) Int. Cl.: B64B 1/70, B64D 1/18

(54) **AEROSTAT ET PROCEDE DE DEBALLASTAGE MIS EN OEUVRE DANS CET AEROSTAT**
LEICHTER-ALS-LUFT-FLUGZEUG UND IN BESAGTEM LEICHTER-ALS-LUFT-FLUGZEUG IMPLEMENTIERTES ANBLASVERFAHREN
LIGHTER-THAN-AIR AIRCRAFT AND DEBALLASTING METHOD IMPLEMENTED IN SAID LIGHTER-THAN-AIR AIRCRAFT

(30) Priorité: 21.08.2014 FR 1457925
(43) Date de publication de la demande: 28.06.2017
(73) Titulaire: Flying Whales, 75001 Paris (FR)
(72) Inventeur: KUHLMANN, Hervé, François, F-92120 Montrouge (FR)
(74) Mandataire: IPAZ
(86) Numéro de dépôt international: PCT/EP2015/068496
(87) Numéro de publication internationale: WO 2016/026739

(56) Documents cités:
- EP-A1- 0 069 403
- DE-A1- 10 252 908
- US-A- 1 792 926

## Description

### Domaine technique

La présente invention concerne un aérostat. Elle concerne aussi un procédé de déballastage mis en oeuvre dans un aérostat.

Un tel dispositif ou procédé permet à un utilisateur de procéder à du déballastage. Le domaine de l'invention est plus particulièrement, mais de manière non limitative, celui des ballons dirigeables.

### Etat de la technique antérieure

Le document EP 0 069 403 A1 décrit un ballon atmosphérique avec des moyens de délestage comprenant un réservoir de fluide sous pression pouvant être vaporisé.

De manière historique le ballastage et le déballastage se font à l'aide de sacs de sable, de grenaille, de plomb, ou d'eau.

Les évolutions technologiques et de nouveaux besoins font ré-émerger l'opportunité d'utiliser des dirigeables.

Les lois de l'aérostatique font que le dirigeable doit toujours être proche de l'équilibre, et si ce dernier doit, en vol, prélever une charge, alors il doit être procédé à un échange de masse pour maintenir son équilibre. Si le ballon charge plusieurs tonnes de fret il doit se séparer de plusieurs tonnes de ballaste.

Dans le cadre de l'utilisation d'eau comme système de ballastage, celle-ci doit être évacuée lors d'une prise de charge. Si l'opération de prise de charge se fait en vol (en position quasi-statique a priori), et lorsqu'il s'agit de grands volumes d'eau, il peut s'avérer impossible de libérer cette eau sous le dirigeable, compte tenu :
- soit de difficultés possibles pour récupérer cette eau,
- soit, si l'eau est déversée et n'est pas récupérée, compte tenu :
   ∘ de problèmes possibles d'évacuation d'eau, ou
   ∘ d'érosion des sols, ou
   ∘ de sécurité des équipes au sol.

Le but de la présente invention est de remédier à cette impossibilité.

### Exposé de l'invention

L'invention est définie par les revendications indépendantes 1 et 11. Des caractéristiques préférentielles ou optionnelles sont définies dans les revendications dépendantes.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- les figures 1 à 8 sont différentes vues schématiques d'un premier mode de réalisation d'aérostat 1 selon l'invention (qui est le mode de réalisation préféré de l'invention), mettant en oeuvre différentes étapes d'un procédé selon l'invention, les figures 1, 2 et 4 étant des vues de profil, les figures 3, 5, 6, 7 et 8 étant des vues de dessus,
- les figures 9 et 10 sont des vues schématiques de deux variantes du circuit hydraulique au sein de cet aérostat 1.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

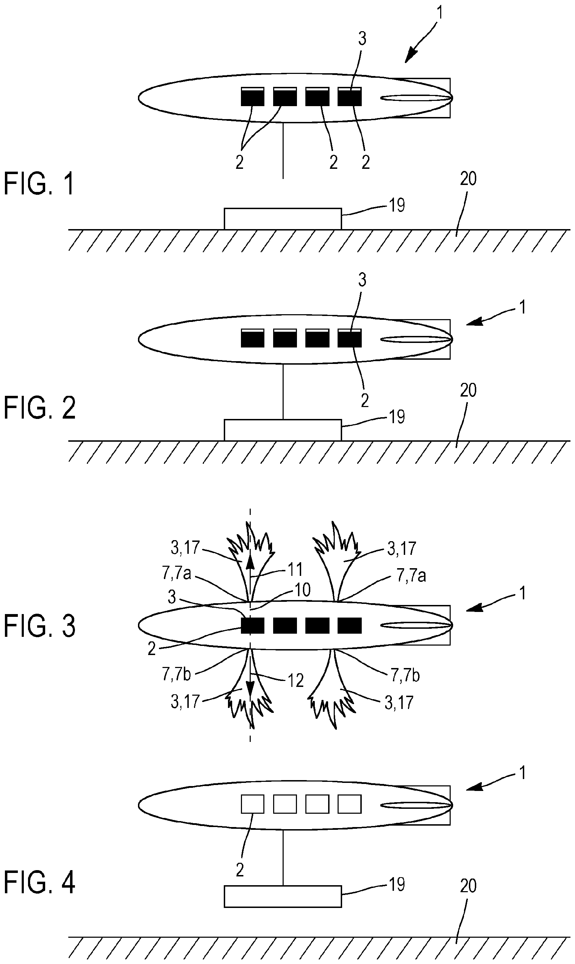

On va donc d'abord décrire, en référence aux figures 1 à 10, un premier mode de réalisation d'aérostat 1 selon l'invention mettant en oeuvre un exemple de procédé selon l'invention.

L'aérostat 1 est par exemple destiné à l'extraction et au transport de grumes, pour le compte de l'industrie du bois.

L'aérostat 1 comprend des moyens de déballastage.

Par aérostat, on entend tout appareil dont la sustentation est assurée par un gaz plus léger que l'air ambiant entourant cet appareil, c'est à dire de préférence un ballon ou un dirigeable.

Dans cet exemple non limitatif, l'aérostat 1 utilisé est un dirigeable ayant une charge utile de soixante tonnes répartie sur seize treuils indépendants. Cet aérostat 1 à une longueur de 150 mètres et un diamètre de 45 mètres pour un volume déplacé de 180000 m³. C'est un dirigeable rigide, sa structure est en poutres de carbone revêtues d'un textile résistant aux agressions atmosphériques (typiquement une trame polyester enduit d'une couche polyfluorée comme du fluorure de polyvinyle ou Tedlar) renfermant 9 cellules d'hélium (gaz porteur plus léger que l'air) pour un volume d'hélium total d'environ 110000m³. Cet exemple n'est donné qu'à titre indicatif, l'invention pouvant être implémentée à partir de toute structure d'aérostat connue de l'homme du métier.

Les moyens de déballastage comprennent au moins un réservoir 2 contenant un liquide 3.

Le liquide 3 comprend (de préférence consiste en) de l'eau.

L'aérostat 1 est muni de seize réservoirs 2 (seuls quatre réservoirs 2 sont représentés sur les figures schématiques pour alléger ces dernières) de 4000 litres chacun (approximativement diamètre un mètre, hauteur six mètres) munis chacun d'une d'électrovalve (référencée 13) ¼ de tour de trois pouces de diamètre, connectés entre eux par des tuyaux rigides 14 de trois pouces de diamètre.

Les moyens de déballastage comprennent en outre un système de mise sous pression 4, 5, 6 du liquide 3 de l'au moins un réservoir 2.

Les moyens de déballastage comprennent en outre au moins un pulvérisateur 7 (de préférence au moins quatre).

Chaque pulvérisateur 7 est agencé pour expulser hors de l'aérostat 1 et sous forme pulvérisée le liquide 3 en provenance du système de mise sous pression 4.

Chaque réservoir 2 est donc muni d'une valve 13. La gestion de l'ouverture des valves 13 permet le réglage de la quantité de liquide 3 dans chaque réservoir 2 et par conséquent le réglage de l'assiette longitudinale de l'aérostat 1. Ce liquide 3 est ensuite acheminé au travers de tuyauteries 16 jusqu'aux pulvérisateurs 7 et se retrouve propulsé sous forme de jet pulvérisé ou diffusé 17.

On entend de préférence par « forme pulvérisée » ou « forme de jet pulvérisé » de liquide une éjection ou une diffusion d'un liquide sous la forme non pas d'un jet continu de liquide, mais d'un jet de gouttes (typiquement microgouttelettes) de liquide sans continuité de liquide entre elles et dont la taille (c'est-à-dire le diamètre dans un cas sphérique idéal ou plus généralement la plus grande distance pouvant être mesurée entre deux points d'une même goutte dans un cas quelconque) est compris entre 1 micromètre (ou 10 micromètres, ou 50 micromètres) et 5 millimètres (de préférence 1 millimètre, idéalement 100 micromètres).

La forme pulvérisée ou la forme de jet pulvérisé est une conséquence de l'éjection du liquide 3 (de l'eau) sous pression par un pulvérisateur 7 comprenant typiquement une buse droite dont le jet va diffuser, du fait d'une instabilité du liquide 3 en pulvérisation après une certaine distance avant de toucher le sol 20. Par exemple, sous une pression de 7 bars et un angle initial du jet de 30° au-dessus de l'horizontal, on projette 3000 litres par minutes à 65 mètres de distance avec une buse droite Mastermatic 4500 réglé sur 3000l/mn. Une pression de 8 bars permet de diffuser le liquide 3 jusqu'à 90m de distance horizontale. Ce même type de tête à une position brouillard et projette ces mêmes 3000l/mn à 25 mètres de distance sous forme de microgouttelettes.

Ainsi, l'aérostat 1 comprend des moyens 4, 5, 6, 7 permettant de pulvériser le liquide 3 au-delà d'un certain rayon d'action autour de l'aérostat 1 de manière qu'au sol 20 ce liquide 3 arrive sous forme de pluie fine sans plus de risque d'érosion ou sans plus de danger pour le personnel au sol qu'une pluie normale, d'autant qu'une grande partie de ce liquide 3 peut se solubiliser dans l'air ou être déplacée par les vents.

En outre, l'utilisation d'eau comme liquide 3 a pour avantage d'être non polluant.

Chaque pulvérisateur 7 est équipé d'un ajusteur de débit 8 agencé pour régler un débit du liquide 3 pulvérisé par ce pulvérisateur 7.

Chaque pulvérisateur 7 est équipé d'un ajusteur de direction 9 agencé pour régler une direction de pulvérisation du liquide 3 pulvérisé par ce pulvérisateur 7.

Ainsi, chaque pulvérisateur 7 est constitué :
- d'une vanne 8 qui contrôle son débit et
- d'un système d'orientation 9 permettant d'orienter son jet 17 et donc son vecteur force.

Le liquide 3 sous pression est acheminé jusqu'aux pulvérisateurs 7.

Chaque pulvérisateur 7 comprend une buse de type Mastermatic ER 4500 montée sur un canon type Hurricane à commande électrique et orientable en direction à plus ou moins 50°, avec un réglage de débit de chez Leader group.

L'aérostat 1 comprend des moyens pour commander chaque ajusteur de débit 8 et/ou chaque ajusteur de direction 9 en fonction d'ordres d'ajustement d'une position spatiale de l'aérostat 1. Ces moyens de commande peuvent comprendre :
- des moyens mécaniques (moyens de commande manuelle comme par exemple un volant dans les mains d'un pilote, des engrenages, etc...), et/ou
- des moyens électroniques (tels qu'un ordinateur, une unité centrale ou de calcul, un circuit électronique analogique (de préférence dédié), un circuit électronique numérique (de préférence dédié), et/ou un microprocesseur (de préférence dédié)), et/ou des moyens logiciels, et/ou
- au moins un capteur (par exemple un capteur de vent et/ou de position).

Ces moyens de commande peuvent être agencés pour prendre en compte :
- une commande manuelle d'ajustement de position (par exemple un volant tourné par un pilote), et/ou
- des données (de préférence provenant de l'au moins un capteur ; par exemple des données de force et/ou de direction du vent, générant des ordres d'ajustement destinés à compenser l'effet de ce vent sur l'aérostat 1), ces données étant de préférence calculées automatiquement par les moyens électroniques et/ou logiciels.

En outre, les moyens de commande sont agencés pour commander une expulsion d'un certain poids de liquide 3 (calculé par les moyens de commande) par l'au moins un pulvérisateur 7 en fonction du poids d'une charge 19 (de préférence de sorte que le poids du liquide expulsé soit égal au poids de la charge 19)

Concernant le système de mise sous pression 4, 5, 6 du liquide, deux variantes de mises sous pressions sont envisagées.

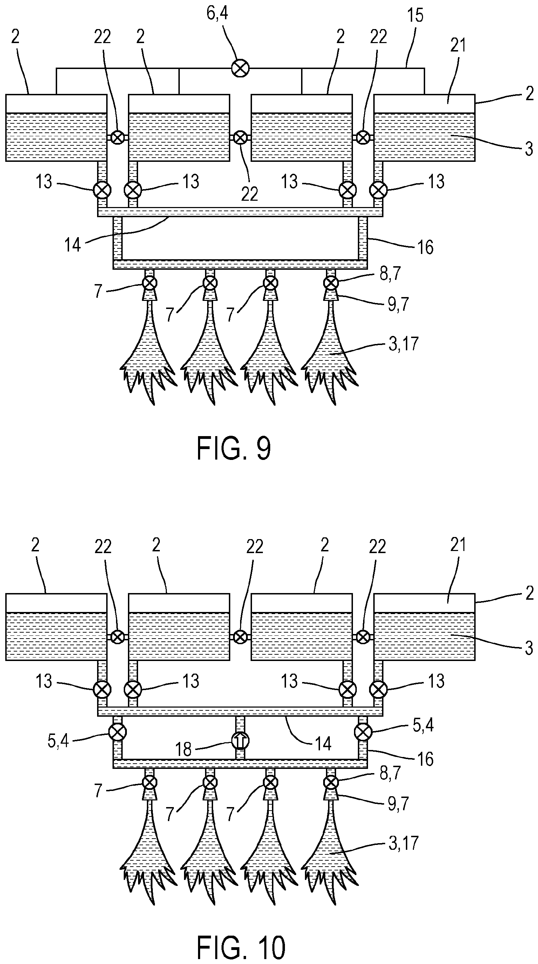

En référence à la figure 9, on va maintenant décrire une première variante de mise sous pression.

Dans cette première variante, le système de mise sous pression 4 comprend l'au moins un réservoir 2 qui permet la mise sous pression du liquide 3 de l'ordre de quelques Bars à l'aide d'un compresseur 6, ou une mise sous pression par le remplissage de l'au moins un réservoir 2 avec le liquide 3.

La pression de l'air ou du gaz 21 à l'intérieur de chaque réservoir 2 au-dessus du liquide 3 est supérieure à la pression environnante autour de l'aérostat 1, c'est-à-dire typiquement supérieure à la pression atmosphérique.

Le système de mise sous pression 4 est agencé pour mettre le liquide 3 sous pression directement à l'intérieur de chaque réservoir 2.

Le système de mise sous pression 4 comprend l'au moins un réservoir 2 et des moyens 6 (le compresseur) agencés pour stocker le liquide 3, dans l'au moins un réservoir 2, sous pression par rapport à l'environnement extérieur de l'aérostat 1. Dans le cas du réservoir 2 sous pression (figure 9), une fois le liquide 3 (eau) stocké dans les divers réservoirs 2 répartis dans l'aérostat 1, chaque réservoir 2 est mis sous pression par le compresseur 6 au travers d'une tuyauterie 15.

En référence à la figure 10, on va maintenant décrire une deuxième variante de mise sous pression, éventuellement combinable à la première variante.

Le système de mise sous pression 4 comprend au moins une pompe 5 agencée pour pomper le liquide 3 hors de l'au moins un réservoir 2.

Dans cette deuxième variante, la mise sous pression est effectuée pas des pompes 5 à eau actionnées par des moteurs électriques, hydrauliques ou thermiques.

Dans ce cas les réservoirs 2 associés n'ont structurellement pas besoin de résister à une mise sous pression (sauf s'ils sont combinés à la première variante), ils sont à pression ambiante.

La pression de l'air ou du gaz 21 à l'intérieur de chaque réservoir 2 au-dessus du liquide 3 est égale à la pression environnante autour de l'aérostat 1, c'est-à-dire typiquement égale à la pression atmosphérique.

Le système de mise sous pression 4 est agencé pour mettre le liquide 3 sous pression en sortie de l'au moins un réservoir 2 (typiquement dans les tuyaux 14 et 16), le long du circuit d'acheminement du liquide 3 entre l'au moins un réservoir 2 et l'au moins un pulvérisateur 7.

Dans le cas de la mise en pression par pompe de la figure 10, le liquide 3 (eau) est stocké dans les divers réservoirs 2 répartis dans l'aérostat 1. Le liquide 3, libéré par l'ouverture des valves 13, est mis sous pression par l'au moins une pompe 5 (de préférence plusieurs pompes 5 pour des questions de sécurité). En cas de fermeture de toutes les vannes 8, une soupape 18 permet d'évacuer (en amont de la ou de chaque pompe 5) la surpression. Typiquement, l'ensemble des réservoirs 2 sont reliés au travers de cette tuyauterie 14, 16 à deux motopompes 5 à turbine centrifuge du type EN 22858 entrainé par un moteur électrique synchrone de 60 kW à 2500 tr/min montés en parallèle. A la sortie de chaque turbine se trouve un régulateur de pression sous forme d'un asservissement de la puissance des moteurs. La pression de service se situe entre 5 et 8,5 bars.

On va maintenant décrire, en référence aux figures 1 à 10, différentes étapes d'un exemple de procédé selon l'invention mis en oeuvre dans l'aérostat 1.

En référence à la figure 1, lorsque l'aérostat 1 vient chercher la charge 19 posée sur un sol 20, l'aérostat est à l'équilibre, son poids apparent est nul.

Une fois attaché à sa charge 19 (figure 2), l'aérostat 1 pèse le poids de sa charge 19.

Pour revenir à l'équilibre, c'est-à-dire disposer d'un poids apparent nul, il doit s'alléger de l'équivalent du poids de la charge 19 par pulvérisation du liquide 3 de ballastage (figure 3) embarqué dans l'au moins un réservoir 2. Cette pulvérisation s'effectue à l'aide d'une ou plusieurs turbines ou pompes 5 ou compresseurs 6 comme précédemment décrit. Ce liquide 3 sous pression est expulsé au travers d'un ou plusieurs pulvérisateurs 7 sous forme pulvérisée.

Ainsi le procédé de déballastage mis en oeuvre dans l'aérostat 1 comprend:
- une mise sous pression du liquide 3 de l'au moins un réservoir 2, par le système de mise sous pression 4, 5, 6
- une expulsion hors de l'aérostat 1 et sous forme pulvérisée du liquide 3 en provenance du système de mise sous pression, par l'au moins un pulvérisateur 7.

La mise sous pression peut comprendre, selon la variante considérée :
- un stockage du liquide 3 dans l'au moins un réservoir 2 sous pression par rapport à l'environnement extérieur de l'aérostat 1, et/ou
- un pompage, par l'au moins une pompe 5, du liquide 3 hors de l'au moins un réservoir 2.

La pesée est réalisée sur chaque treuil au niveau de la fixation du réa situé en partie haute de la soute de l'aérostat 1, l'information est donnée par un axe dynamométrique qui reprend l'effort donné par le poids de la grume soulevé. Un réservoir 2 est attribué à chaque treuil et est localisé au droit de chaque charge, on compense donc exactement en poids et en moment.

Dans cet aérostat 1 comprenant plusieurs réservoirs 2, l'aérostat 1 comprend des moyens (pompes réversibles 22) pour transférer du liquide 3 d'un réservoir 2 à un autre réservoir 2. Le pilote de l'aérostat 1 ressent très sensiblement un déséquilibre longitudinal par un changement de l'assiette de l'aérostat 1, il peut transférer de manière indépendante du circuit de ballastage, la quantité de liquide 3 voulue d'un réservoir 2 à l'autre et ainsi rétablir l'équilibre (par exemple par une ou plusieurs pompe(s) 22).

Si l'équilibre ne peut se réaliser par le transfert de liquide 3 (par exemple si tout le liquide 3 a été déballasté) le pilote peut aussi agir sur la répartition d'hélium dans les différentes cellules de gaz porteur de l'aérostat 1.

Une fois libéré de ce liquide 3 (figure 4) l'aérostat 1 est de nouveau à l'équilibre, donc d'un poids apparent nul, et il peut donc de nouveau voler avec sa charge 19 et l'apporter sur le lieu de transbordement ou l'aérostat 1 échangera sa cargaison contre son équivalent massique en liquide 3 qui sera stocké dans l'au moins un réservoir 2.

L'aérostat 1 peut alors repartir pour une nouvelle rotation.

Pendant ces différentes étapes venant d'être décrites en référence aux figures 1 à 4, le contrôle en position de l'aérostat 1 lors du chargement est crucial et doit être précis.

L'apport de la poussée dû à la pulvérisation du liquide 3 est loin d'être négligeable et :
- doit donc être compensé pour limiter les perturbations de positionnement de l'aérostat 1 (utilisation « symétrique » des pulvérisateurs 7), et/ou
- peut être utilisé pour de l'aide au positionnement (utilisation « dissymétrique » des pulvérisateurs 7).

Pour cela, le procédé mis en oeuvre par l'aérostat 1 comprend un réglage d'un débit du liquide 3 pulvérisé par l'au moins un pulvérisateur 7, et/ou un réglage d'une direction de pulvérisation du liquide 3 pulvérisé par l'au moins un pulvérisateur 7. Le procédé mis en oeuvre par l'aérostat 1 comprend préférence en outre une commande du réglage du débit du liquide 3 pulvérisé par l'au moins un pulvérisateur 7 et/ou du réglage de la direction de pulvérisation du liquide 3 pulvérisé par l'au moins un pulvérisateur 7 en fonction des ordres d'ajustement (en provenance des moyens de commande) d'une position spatiale de l'aérostat 1, via les moyens de commande agencés pour commander l'ajusteur de débit 8 et l'ajusteur de direction 9 de chaque pulvérisateur 7.

En référence à la figure 3 (utilisation « symétrique »), l'aérostat 1 comprend au moins un couple de pulvérisateurs 7a, 7b appelé aussi « couple d'ajustement ».

Chaque couple de pulvérisateurs 7a, 7b comprend :
- un premier pulvérisateur 7a agencé pour pulvériser le liquide 3 selon une première direction de pulvérisation 11 comprenant une composante horizontale (i.e. perpendiculaire à la direction de l'attraction gravitationnelle terrestre au niveau de l'aérostat 1) et
- un deuxième pulvérisateur 7b agencé pour pulvériser le liquide 3 selon une deuxième direction de pulvérisation 12 comprenant une composante horizontale non nulle.

Pour chaque couple de pulvérisateur 7a, 7b, il existe :
- au moins une position de l'ajusteur de direction 9 de chaque pulvérisateur de ce couple pour laquelle les composantes horizontales des première 11 et deuxième 12 directions de pulvérisation sont opposées et portées par un même axe 10, et
- au moins une position de l'ajusteur de débit 8 de chaque pulvérisateur de ce couple pour laquelle la valeur de la force exercée sur l'aérostat 1 par une pulvérisation du liquide 3 via le premier pulvérisateur 7a de ce couple est égale à la valeur de la force exercée sur l'aérostat 1 par une pulvérisation du liquide 3 via le deuxième pulvérisateur 7b de ce couple.

L'étape, illustrée sur la figure 3, du procédé mis en oeuvre par l'aérostat 1 correspond à ces positions des ajusteurs de direction 9 et ajusteurs de débit 8 pour lesquelles le premier pulvérisateur 7a pulvérise le liquide 3 selon la première direction de pulvérisation 11 et le deuxième pulvérisateur 7b pulvérise le liquide 3 selon la deuxième direction de pulvérisation 12 (de préférence avec une même force).

On entend par « direction de pulvérisation » d'un pulvérisateur 7, 7a ou 7b l'opposée de la direction de la force exercée sur l'aérostat 1 par une expulsion ou pulvérisation du liquide 3 via ce pulvérisateur.

Ainsi, selon cette utilisation « symétrique », les pulvérisateurs 7 permettent d'évacuer le liquide 3 rapidement et puissamment autour de l'aérostat 1 de manière symétrique si l'on ne veut pas ou peu perturber le positionnement de l'aérostat 1.

Dans certains cas particuliers :
- (par exemple directions de pulvérisation 11, 12 strictement horizontales), pour chaque couple de pulvérisateur 7a, 7b, il existe au moins une position de l'ajusteur de direction 8 de chaque pulvérisateur de ce couple pour laquelle les première et deuxième directions de pulvérisation 11, 12 sont opposées et portées par un même axe 10, ou
- les directions de pulvérisation 11, 12 sont obliques (i.e. avec une composante horizontale non nulle) avec en outre une composante non nulle orientée vers le bas (le bas étant orienté selon la direction de l'attraction gravitationnelle terrestre), ce qui permet de remonter légèrement l'aérostat 1 lors de son déballastage, ou
- de préférence les directions de pulvérisation 11, 12 sont obliques (i.e. avec une composante horizontale non nulle) avec en outre une composante non nulle orientée vers le haut (le haut étant orienté selon une direction opposée à la direction de l'attraction gravitationnelle terrestre), ce qui permet de rejeter le liquide 3 le plus loin possible de l'aérostat 1, et donc de manière la plus diffuse possible, afin de minimiser les effets d'érosion ou le ressenti pour le personnel au sol 20.

On note que, dans un cas plus général, les forces des deux pulvérisateurs 7a, 7b d'un couple ne sont pas nécessairement égales, notamment si les moyens de commande prennent en compte un vent dont on cherche à compenser l'effet.

De même, les composantes horizontales peuvent ne pas être portées par un même axe 10, par exemple selon la direction de ce vent.

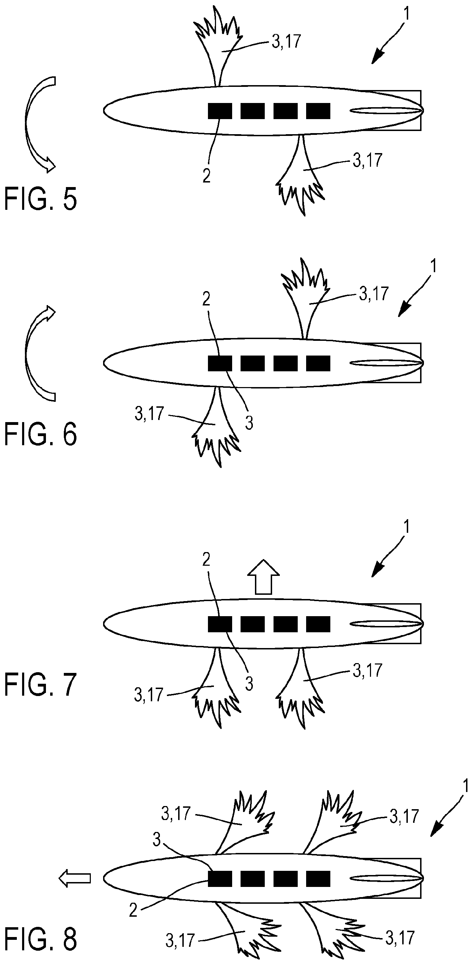

De même, en référence aux figures 5 à 8, une utilisation (dite « dissymétrique ») contrôlée de la pulvérisation du liquide 3 par les (de préférence au moins quatre) pulvérisateurs 7, via les moyens de commande agencés pour commander l'ajusteur de débit 8 et l'ajusteur de direction 9 de chaque pulvérisateur 7, peut participer au contrôle en position de l'aérostat 1, de préférence au-dessus de sa charge 19.

La gestion individuelle des ouvertures des buses des pulvérisateurs 7 et de leurs orientations peut ainsi grandement aider au positionnement.

La figure 5 illustre comment une utilisation dissymétrique contrôlée de la pulvérisation par les pulvérisateurs 7 peut faire pivoter l'aérostat 1 (vu de dessus) vers la gauche.

La figure 6 illustre comment une utilisation dissymétrique contrôlée de la pulvérisation par les pulvérisateurs 7 peut faire pivoter l'aérostat 1 (vu de dessus) vers la droite.

La figure 7 illustre comment une utilisation dissymétrique contrôlée de la pulvérisation par les pulvérisateurs 7 peut faire translater l'aérostat 1 (vu de dessus) vers la droite. On pourrait bien entendu sur le même principe faire translater l'aérostat 1 vers la gauche.

La figure 8 illustre comment une utilisation dissymétrique contrôlée de la pulvérisation par les pulvérisateurs 7 peut faire déplacer l'aérostat 1 (vu de dessus) vers l'avant. On pourrait bien entendu sur le même principe faire déplacer l'aérostat 1 vers l'arrière.

Bien entendu, on pourrait combiner tout ou partie des ajustements de position décrits ci-dessus en référence aux figures 5 à 8.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Aérostat (1) comprenant des moyens de déballastage, les moyens de déballastage comprenant :
- au moins un réservoir (2) contenant un liquide (3),
- un système de mise sous pression (4, 5, 6) du liquide de l'au moins un réservoir,
- au moins un pulvérisateur (7), agencé pour expulser le liquide en provenance du système de mise sous pression,
**caractérisé en ce que** chaque pulvérisateur est équipé d'un ajusteur de direction (9) agencé pour régler une direction de pulvérisation du liquide expulsé par ce pulvérisateur.

2. Aérostat selon la revendication 1, **caractérisé en ce qu'**il comprend en outre des moyens pour commander chaque ajusteur de direction en fonction d'ordres d'ajustement d'une position spatiale de l'aérostat.

3. Aérostat selon l'une des revendications 1 ou 2, **caractérisé en ce qu'**il comprend au moins un couple de pulvérisateurs (7a, 7b), chaque couple de pulvérisateurs comprenant un premier pulvérisateur (7a) agencé pour expulser le liquide selon une première direction de pulvérisation (11) comprenant une composante horizontale et un deuxième pulvérisateur (7b) agencé pour expulser le liquide selon une deuxième direction de pulvérisation (12) comprenant une composante horizontale, les composantes horizontales des première et deuxième directions de pulvérisation étant opposées et portées par un même axe (10).

4. Aérostat selon l'une quelconque des revendications précédentes, **caractérisé en ce que** le système de mise sous pression comprend au moins une pompe (5) agencée pour pomper le liquide hors de l'au moins un réservoir.

5. Aérostat selon l'une quelconque des revendications précédentes, **caractérisé en ce que** le système de mise sous pression comprend l'au moins un réservoir comprenant le liquide stocké sous pression.

6. Aérostat selon l'une quelconque des revendications précédentes, **caractérisé en ce que** l'au moins un pulvérisateur (7) est agencé pour expulser le liquide selon une direction de pulvérisation comprenant une composante horizontale non nulle.

7. Aérostat selon l'une quelconque des revendications précédentes, **caractérisé en ce que** l'au moins un pulvérisateur (7) est agencé pour expulser le liquide selon une direction de pulvérisation comprenant une composante verticale non nulle dirigée vers le haut.

8. Aérostat selon l'une quelconque des revendications précédentes, **caractérisé en ce que** chaque pulvérisateur est équipé d'un ajusteur de débit (8) agencé pour régler un débit du liquide expulsé par ce pulvérisateur.

9. Aérostat selon la revendication 8, **caractérisé en ce qu'**il comprend en outre des moyens pour commander chaque ajusteur de débit en fonction d'ordres d'ajustement d'une position spatiale de l'aérostat.

10. Aérostat selon l'une quelconque des revendications précédentes, **caractérisé en ce qu'**ils comprend plusieurs réservoirs (2), et **en ce qu'**il comprend en outre des moyens (22) pour transférer du liquide (3) d'un réservoir (2) à un autre réservoir (2).

11. Procédé de déballastage mis en oeuvre dans un aérostat (1) comprenant au moins un réservoir (2) contenant un liquide (3), ledit procédé comprenant :
- une mise sous pression du liquide de l'au moins un réservoir, par un système de mise sous pression (4, 5, 6)
- une expulsion du liquide en provenance du système de mise sous pression, par au moins un pulvérisateur (7),
**caractérisé en ce qu'**il comprend en outre un réglage de la direction de pulvérisation du liquide expulsé par chaque pulvérisateur.

## Patentansprüche

1. Luftfahrzeug (1) mit Ballastabgabeeinrichtungen, wobei die Ballastabgabeeinrichtungen enthalten:
- zumindest einen Tank (2), der eine Flüssigkeit (3) enthält,
- ein System (4, 5, 6) zum Druckbeaufschlagen der Flüssigkeit des zumindest einen Tanks,
- zumindest einen Zerstäuber (7), der dazu angeordnet ist, die Flüssigkeit aus dem Druckbeaufschlagungssystem auszutreiben,
**dadurch gekennzeichnet, dass** jeder Zerstäuber mit einem Richtungseinsteller (9) ausgestattet ist, der dazu angeordnet ist, eine Zerstäubungsrichtung der über diesen Zerstäuber ausgetriebenen Flüssigkeit einzustellen.

2. Luftfahrzeug nach Anspruch 1, **dadurch gekennzeichnet, dass**
er ferner Einrichtungen zum Steuern eines jeden Richtungseinstellers in Abhängigkeit von Befehlen zum Einstellen einer räumlichen Position des Luftfahrzeugs enthält.

3. Luftfahrzeug nach einem der Ansprüche 1 oder 2, **dadurch gekennzeichnet, dass**
es zumindest ein Paar von Zerstäubern (7a, 7b) enthält, wobei jedes Paar von Zerstäubern einen ersten Zerstäuber (7a), der dazu angeordnet ist, die Flüssigkeit in einer ersten Zerstäubungsrichtung (11) mit einer horizontalen Komponente auszutreiben, und einen zweiten Zerstäuber (7b) enthält, der dazu angeordnet ist, die Flüssigkeit in einer zweiten Zerstäubungsrichtung (12) mit einer horizontalen Komponente auszutreiben, wobei die horizontalen Komponenten der ersten und der zweiten Zerstäubungsrichtung einander entgegengesetzt sind und auf einer gemeinsamen Achse (10) liegen.

4. Luftfahrzeug nach einem der vorangehenden Ansprüche,
**dadurch gekennzeichnet, dass**
das Druckbeaufschlagungssystem zumindest eine Pumpe (5) enthält, die dazu angeordnet ist, die Flüssigkeit aus dem zumindest einen Tank zu pumpen.

5. Luftfahrzeug nach einem der vorangehenden Ansprüche,
**dadurch gekennzeichnet, dass**
das Druckbeaufschlagungssystem den zumindest einen Tank enthält, der die unter Druck gespeicherte Flüssigkeit enthält.

6. Luftfahrzeug nach einem der vorangehenden Ansprüche,
**dadurch gekennzeichnet, dass**
der zumindest eine Zerstäuber (7) dazu angeordnet ist, die Flüssigkeit in einer Zerstäubungsrichtung mit einer horizontalen Komponente ungleich null auszutreiben.

7. Luftfahrzeug nach einem der vorangehenden Ansprüche,
**dadurch gekennzeichnet, dass**
der zumindest eine Zerstäuber (7) dazu angeordnet ist, die Flüssigkeit in einer Zerstäubungsrichtung mit einer nach oben gerichteten vertikalen Komponente ungleich null auszutreiben.

8. Luftfahrzeug nach einem der vorangehenden Ansprüche,
**dadurch gekennzeichnet, dass**
jeder Zerstäuber mit einer Durchsatzeinstelleinrichtung (8) ausgestattet ist, die dazu angeordnet ist, einen Durchsatz der über diesen Zerstäuber ausgetriebenen Flüssigkeit einzustellen.

9. Luftfahrzeug nach Anspruch 8, **dadurch gekennzeichnet, dass**
es ferner Einrichtungen zum Steuern einer jeden Durchsatzeinstelleinrichtung in Abhängigkeit von Befehlen zum Einstellen einer räumlichen Position des Luftfahrzeugs enthält.

10. Luftfahrzeug nach einem der vorangehenden Ansprüche,
**dadurch gekennzeichnet, dass**
es mehrere Tanks (2) enthält, und dass
es ferner Einrichtungen (22) zum Überführen der Flüssigkeit (3) von einem Tank (2) in einen anderen Tank (2) enthält.

11. Verfahren zur Ballastabgabe, das bei einem Luftfahrzeug (1) erfolgt, das zumindest einen eine Flüssigkeit (3) enthaltenden Tank (2) enthält, wobei das Verfahren umfasst:
- eine Druckbeaufschlagung der Flüssigkeit des zumindest einen Tanks über ein Druckbeaufschlagungssystem (4, 5, 6),
- ein Austreiben der Flüssigkeit aus dem Druckbeaufschlagungssystem über zumindest einen Zerstäuber (7),
**dadurch gekennzeichnet, dass** es ferner ein Einstellen der Zerstäubungsrichtung der über jeden Zerstäuber ausgetriebenen Flüssigkeit umfasst.

## Claims

1. Lighter-than-air aircraft (1) comprising deballasting means, the deballasting means comprising:
- at least one tank (2) containing a liquid (3),
- a system for pressurizing (4, 5, 6) the liquid of the at least one tank,
- at least one sprayer (7), arranged in order to expel the liquid originating from the pressurization system
**characterized in that** each sprayer is equipped with a direction adjuster (9) arranged in order to adjust a direction of spraying of the liquid expelled by this sprayer.

2. Lighter-than-air aircraft according to claim 1, **characterized in that** it further comprises means for controlling each direction adjuster according to commands for the adjustment of a spatial position of the lighter-than-air aircraft.

3. Lighter-than-air aircraft according to claim 1 or 2, **characterized in that** it comprises at least one pair of sprayers (7a, 7b), each pair of sprayers comprising a first sprayer (7a) arranged in order to expel the liquid in a first direction of spraying (11) comprising a horizontal component and a second sprayer (7b) arranged in order to expel the liquid in a second direction of spraying (12) comprising a horizontal component, the horizontal components of the first and second directions of spraying being opposite and carried on one and the same axis (10).

4. Lighter-than-air aircraft according to any one of the preceding claims, **characterized in that** the pressurization system comprises at least one pump (5) arranged in order to pump the liquid out of the at least one tank.

5. Lighter-than-air aircraft according to any one of the preceding claims, **characterized in that** the pressurization system comprises the at least one tank comprising the liquid stored under pressure.

6. Lighter-than-air aircraft according to any one of the preceding claims, **characterized in that** the at least one sprayer (7) is arranged in order to expel the liquid in a direction of spraying comprising a non-zero horizontal component.

7. Lighter-than-air aircraft according to any one of the preceding claims, **characterized in that** the at least one sprayer (7) is arranged in order to expel the liquid in a direction of spraying comprising a non-zero vertical component directed upwards.

8. Lighter-than-air aircraft according to any one of the preceding claims, **characterized in that** each sprayer is equipped with a flow-rate adjuster (8) arranged in order to adjust a flow rate of the liquid expelled by this sprayer.

9. Lighter-than-air aircraft according to claim 8, **characterized in that** it further comprises means for controlling each flow-rate adjuster according to commands for the adjustment of a spatial position of the lighter-than-air aircraft.

10. Lighter-than-air aircraft according to any one of the preceding claims, **characterized in that** it comprises several tanks (2) and **in that** it also comprises means (22) for transferring liquid (3) from one tank (2) to another tank (2).

11. Deballasting method implemented in a lighter-than-air aircraft (1) comprising at least one tank (2) containing a liquid (3), said method comprising:
- pressurizing the liquid of the at least one tank, by a pressurization system (4, 5, 6)
- expelling the liquid originating from the pressurization system via at least one sprayer (7)
**characterized in that** it further comprises adjusting the direction of spraying of the liquid expelled by each sprayer.
